(19) **Europäisches Patentamt**

**European Patent Office**

**Office européen des brevets**

(11) **EP 1 669 634 A1**

(12) **EUROPEAN PATENT APPLICATION**
published in accordance with Art. 158(3) EPC

(43) Date of publication:
**14.06.2006 Bulletin 2006/24**

(51) Int Cl.:
***F16F 15/03*** (1968.09)

(21) Application number: **04724355.5**

(22) Date of filing: **30.03.2004**

(86) International application number:
**PCT/JP2004/004491**

(87) International publication number:
**WO 2005/026573 (24.03.2005 Gazette 2005/12)**

(84) Designated Contracting States:
**CH DE FR GB LI NL**

(30) Priority: **11.09.2003 JP 2003319165**

(71) Applicant: **Japan Science and Technology Agency
Kawaguchi-shi,
Saitama 332-0012 (JP)**

(72) Inventors:
• **MIZUNO, Takeshi
Inagi Shi, Tokyo 206-0803 (JP)**

• **KISHITA, Daisuke
Tokorozawa-shi, Saitama 359-1164 (JP)**
• **TAKASAKI, Masaya
Nerima-ku, Tokyo 177-0034 (JP)**

(74) Representative: **Hall, Matthew Benjamin
Frank B. Dehn & Co.
St Bride's House
10 Salisbury Square
London EC4Y 8JD (GB)**

(54) **METHOD AND DEVICE FOR VIBRATION RESISTANCE**

(57)    The present invention relates to a method for vibration isolation featuring a two-part supporter made up of two supporters with positive and negative spring characteristics that are connected in series, and another supporter with positive spring characteristics that is installed in parallel with the two-part supporter. Vibration from the floor to the first member is isolated by the springs installed between the floor 1 and the first member 2; vibration transmitted from the first to the second member is isolated by the magnetic levitation mechanism 4 with zero-power characteristics comprising permanent magnets and electromagnets that are installed between the first member 2 and the second member 3 and by the load supporter 5 with positive spring characteristics that is installed between the base and the second member; and the load acting on the second member is supported by said magnetic levitation mechanism and said load supporter.

Fig. 2

EP 1 669 634 A1

**Description**

Field of Technology

The present invention relates to a method and apparatus for vibration isolation that features a two-part supporter which comprises two supporters with positive and negative spring characteristics that are connected in series, and another supporter with positive spring characteristics that is installed in parallel with the two-part supporter.

Background Art

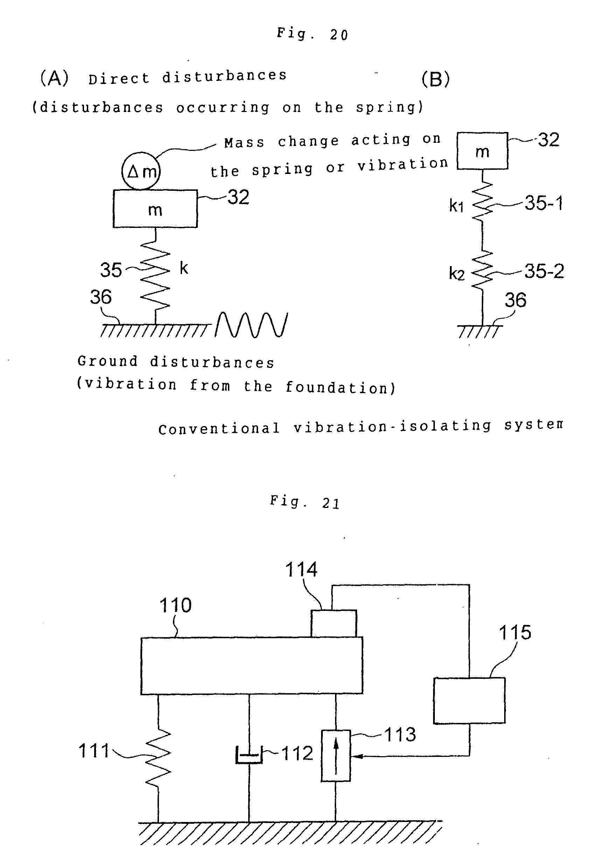

Recent semiconductor manufacturing systems and very small area measuring systems feature increasingly higher accuracy and performance. An apparatus to remove disturbances such as vibration has likewise become increasingly important. Vibration and disturbances removed by a vibration isolator are largely classified into ground disturbances caused by vibration of the floor on which the apparatus is installed and direct disturbances acting directly on the springs in the apparatus. A low rigidity mechanism is suitable for removing ground disturbances while high rigidity is required for removing direct disturbances. The conventional passive vibration isolator shown in Fig. 20 (A) removes vibration by isolating ground disturbances. Spring rigidity decreases when the spring characteristic k is decreased, and this reduces transmissibility of vibration from the floor 36 (ground disturbance). Such an apparatus, however, is inadequate for disturbances acting on the spring itself (direct disturbance) . A direct disturbance is caused by, for example, change in mass m on the vibration-isolating table 32 (mass m) or by a change in the load acting on the vibration-isolating table 32. The spring rigidity must be increased to some extent to control the disturbance acting on the spring. Contradictory features are required for the apparatus: a low rigidity mechanism to absorb disturbance and a high rigidity mechanism to maintain location and position.

In Fig. 20 (B), two springs 35-1 and 35-2 with positive spring characteristics k1 and k2, respectively, are connected in series to form an ordinary vibration isolator. The spring characteristics of this vibration isolator are given by:

$$kc = k1\ k2/(k1 + k2)\quad (1)$$

When ordinary springs with positive spring characteristics are connected in series, the spring characteristics of the connected spring set are always lower than the spring characteristics before connection. It is difficult for a vibration isolator using only conventional springs to have the high rigidity required to remove disturbances acting on the spring because of the mass change or vibrations. Active vibration-isolating controllers have also been proposed.

Figure 21 shows the principle of an ordinary active vibration-isolating controller. The controller unit 115 calculates the input values to control the vibration of the vibration-isolating table 110 using data collected by the acceleration sensor 114 which is installed on the vibration-isolating table 110. The inputs are used to determine the motion of the actuator 113 which is installed in parallel with the spring 111 and the damper 112 to suppress vibration.

This approach assumes that the vibrations of the isolating table and floor are accurately detected. For this system to function as expected, an expensive servo acceleration sensor capable of detecting low-frequency vibrations with good sensitivity is necessary. Even if this is provided, some servo acceleration sensors lack the rigidity necessary to resist direct disturbances or they do not exhibit optimal vibration isolation performance.

With a view toward overcoming such drawbacks of conventional methods and apparatus for vibration isolation, the inventors of the present invention have already proposed a method and apparatus for vibration isolation with high rigidity that withstands direct disturbances while maintaining the vibration isolation function for ground disturbances necessary for precision machining using the derived high vibration isolation function (see Publication of unexamined patent application No. 81498-2002).

According to the method and apparatus for vibration isolation described in the above-mentioned literature, vibration absorbing springs are installed between the floor (base) and the intermediate plate (the first member). A magnetic levitation mechanism with zero-power characteristics comprising permanent magnets and electromagnets is installed between the intermediate plate and the vibration-isolating table (the second member) to isolate vibration. The spring-type vibration isolation mechanism installed between the floor and the intermediate plate, together with the magnetic levitation vibration isolation mechanism set between the intermediate plate and the vibration-isolating table, assure high rigidity against direct disturbances while isolating ground disturbances to enable precision machining using the derived high vibration isolation function.

The method and apparatus for vibration isolation described in the above-mentioned literature offered an effective and satisfactory zero-compliance mechanism but new problems arose as a result of the increased size of the steppers and other parts.

The actuator (magnetic levitation mechanism, etc.) providing negative spring characteristics to the system must support the entire mass of the vibration-isolating table. To manufacture a large vibration isolator, an actuator of a large output is required, and this poses a serious problem.

When the zero-power magnetic levitation mechanism is used to provided negative spring characteristics, a large mass of permanent magnets is required to achieve zero-power magnetic levitation, and this in turn leads to higher manufacturing costs.

For a magnetic levitation system based on attraction of direct current electromagnets for achieve zero-power magnetic levitation, the attraction is allowed to act only on the object being levitated in principle. The area of the vibration-isolating table where attraction occurs must be located below the intermediate plate. This makes the structure of the vibration isolator complex and limits the freedom of its design.

To solve the above-mentioned problems, the present invention proposes a method and apparatus of vibration isolation that enhances rigidity to resist direct disturbances without degrading the vibration isolation function for ground disturbances and maintains high performance at a low cost even for a massive apparatus. This is achieved by a spring supporter to support the load which is set in parallel with the zero-compliance mechanism.

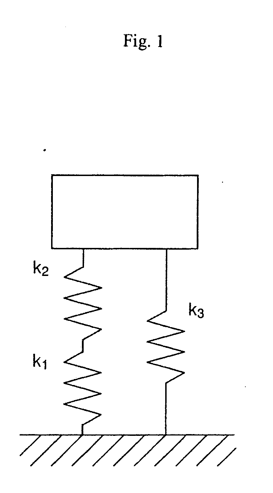

The principle of the present invention is described below referring to Fig. 1.

Two springs with spring characteristics k1 and k2 are connected in series, and another spring with spring characteristic k3 is arranged in parallel with the above-mentioned two springs to make one spring set. The spring characteristic kc of the spring set is given by:

$$\texttt{kc = [k1 \quad k2/(k1 + k2)] + k3}$$

$$\texttt{If k1 = -k2,}$$

$$\texttt{| kc | = +}$$

This holds true irrespective of the value of k3.

This means that rigidity against direct disturbances is infinite, even if a spring element to support the load is placed in parallel with the zero-compliance mechanism comprising the two springs with positive and negative spring characteristics which are connected in series.

The present invention is based on the above-mentioned knowledge. The present invention features a two-part supporter with positive spring characteristics and negative spring characteristics connected in series, and a load supporter with positive spring characteristics installed in parallel with the above-mentioned two-part supporter.

Disclosure of the Invention

To attain the above-mentioned objective, the present invention provides the following technical means:

A method for vibration isolation wherein nearly infinite rigidity adequate for preventing direct disturbances is achieved and vibration from the base is isolated due to the functioning of the first member installed between the base and the second member; a supporter set comprising two individual supporters with positive and negative spring characteristics is connected in series; and a load supporter with positive spring characteristics is installed between the base and the second member in parallel with said supporter set,

A method for vibration isolation wherein vibration transmitted from the base to the first member is isolated by springs installed between the base and the first member; wherein vibration transmitted from the first to the second member is isolated by a magnetic levitation mechanism with zero-power characteristics comprising permanent magnets and electromagnets installed between the first and second members and the load supporter with positive spring characteristics that is installed between the base and the second member; and the load acting on the second member is supported by said magnetic levitation mechanism and said load supporter,

A method for vibration isolation wherein vibration transmitted from the base to the first member is isolated by springs installed between the base and the first member; vibration transmitted from the first to the second member is isolated by a magnetic levitation mechanism with zero-power characteristics comprising permanent magnets and electromagnets and spring elements with positive spring characteristics in parallel with said magnetic levitation mechanism that is installed between the first and the second members, and a load supporter with positive spring characteristics that is installed between the base and the second member; and the load acting on the second member is supported by said magnetic levitation mechanism and said load supporter,

A method for vibration isolation wherein vibration transmitted from the base to the first member is isolated by spring elements with positive spring characteristics and a linear actuator in parallel with said spring elements that is installed between the base and the first member; vibration transmitted from the first to the second member is isolated by a magnetic levitation mechanism with zero-power characteristics comprising permanent magnets and electromagnets that is installed between the first and the second members, and a load supporter with positive spring characteristics that is installed between the base and second member; and the load acting on the second member is supported by said magnetic levitation mechanism and said load supporter,

A method for vibration isolation wherein vibration transmitted from the base to the first member is isolated by springs installed between the base and the first member; vibration transmitted from the first to the second member is isolated by a zero-power magnetic levitation mechanism with negative spring characteristics that is installed between the first and the second members and a load supporter comprising pneumatic springs with positive spring characteristics that is installed between the second member and the base; and a part of the load acting on the second member is supported by said load supporter,

An apparatus for vibration isolation comprising an intermediate plate supported on the base by springs with specified positive spring characteristics; the vibration-isolating table is supported on the intermediate plate by a magnetic levitation mechanism with zero-power characteristics and specified negative spring characteristics comprised of permanent magnets and electromagnets; and a load supporter with positive spring characteristics that is installed between the vibration-isolating table and the base,

An apparatus for vibration isolation comprising an intermediate plate supported on the base by springs with specified positive spring characteristics; the vibration-isolating table is supported on the intermediate plate by a magnetic levitation mechanism with zero-power characteristics and specified negative spring characteristics comprising permanent magnets and electromagnets and by spring elements with positive spring characteristics that are arranged in parallel with the magnetic levitation mechanism; and a load supporter with positive spring characteristics is arranged between said vibration-isolating table and said base,

An apparatus for vibration isolation comprising an intermediate plate supported on the base by spring elements with specified positive spring characteristics and a linear actuator; the vibration-isolating table is supported on the intermediate plate by the magnetic levitation mechanism with zero-power characteristics and specified negative spring characteristics comprising permanent magnets and electromagnets; and a load supporter with positive spring characteristics that is installed between said vibration-isolating table and said base,

An apparatus for vibration isolation wherein said load supporter comprises the spring elements with positive spring characteristics and the damper of the specified damping rate that is installed in parallel with said spring elements,

An apparatus for vibration isolation wherein said load supporter comprises pneumatic springs with positive spring characteristics,

An apparatus for vibration isolation wherein the damper of the specified damping rate is installed between the base and the intermediate plate in combination with said spring elements with positive spring characteristics,

An apparatus for vibration isolation wherein the attraction of the electromagnets of said magnetic levitation mechanism is variable with changes in the load acting on the vibration-isolating table,

The above-mentioned apparatus for vibration isolation wherein the halves of said base and vibration-isolating table, respectively, are connected by their respective tie members; the halves of the base and the vibration-isolating table are arrayed alternately; and the intermediate plate is installed between one half of the base and one half of the vibration-isolating table,

The above-mentioned apparatus for vibration isolation wherein said base is the floor of the apparatus for vibration isolation,

The above-mentioned apparatus for vibration isolation wherein at least one each of the base, intermediate plate and vibration-isolating table are modularized into one functional unit,

A method for vibration isolation wherein vibration transmitted from the base to the first member is isolated by springs installed between the base and the first member; vibration transmitted from the first to the second member is isolated by the supporter with the negative spring characteristics comprising the actuator and the controller installed between the first and the second members; and a part of the load acting on the second member is supported by the load supporter with positive spring characteristics that is installed between the second member and the base,

A method for vibration isolation wherein vibration transmitted from the base to the first member is isolated by the springs installed between the base and the first member; vibration transmitted from the first to the second member is isolated by the supporter with negative spring characteristics comprising the actuator and the controller installed between the first and the second members and by the spring elements with positive spring characteristics that are installed between the first and the second member; and a part of the load acting on the second member is supported by the load supporter with positive spring characteristics that is installed between the second member and the base,

A method for vibration isolation wherein vibration transmitted from the base to the first member is isolated by the supporter with positive spring characteristics and the linear actuator installed between the base and the first member; vibration transmitted from the first to the second member is isolated by the supporter with negative spring characteristics comprising the actuator and the controller that is installed between the first and the second members and by the spring elements with positive spring characteristics that are installed between the first and the second member in parallel with said actuator; and a part of the load acting on the second member is supported by the load supporter with positive spring characteristics that is installed between the second member and the base,

An apparatus for vibration isolation comprising the intermediate plate supported on the base by spring elements with specified positive spring characteristics; the vibration-isolating table is supported on the intermediate plate by the supporter with specified negative spring characteristics comprising the actuator and the controller; and the load supporter with positive spring characteristics is installed between the vibration-isolating table and the base,

An apparatus for vibration isolation comprising the intermediate plate supported on the base by spring elements with specified positive spring characteristics and the linear actuator; the vibration-isolating table is supported on the intermediate plate by the supporter with specified negative spring characteristics comprising the actuator and the controller; and the load supporter with positive spring characteristics is installed between the vibration-isolating table and the base.

An apparatus for vibration isolation wherein the spring elements with positive spring characteristics are installed in parallel with the supporter (actuator) that is installed between the intermediate plate and the vibration-isolating table,

The above-mentioned apparatus for vibration isolation wherein the halves of said base and vibration-isolating table are connected by their respective tie members; the halves of the base and the vibration-isolating table are arrayed alternately; and the intermediate plate is installed between one half of the base and one half of the vibration-isolating table,

The above-mentioned apparatus for vibration isolation wherein said base is the floor of the apparatus for vibration isolation,

The above-mentioned apparatus for vibration isolation wherein at least one each of the base, intermediate plate and vibration-isolating table are modularized into one functional unit,

An apparatus for vibration isolation comprising more than one intermediate plate supported on the base by spring elements with specified positive spring characteristics; the vibration-isolating table is supported on said intermediate plates by the supporter with specified negative spring characteristics comprising the actuator and the controller; and the load supporter with positive spring characteristics is installed between the vibration-isolating table and the base,

An apparatus for vibration isolation wherein said load supporter comprises springs with positive spring characteristics and the damper of the specified damping rate that is installed in parallel with the springs,

An apparatus for vibration isolation wherein said load supporter comprises pneumatic springs with positive spring characteristics,

An apparatus for vibration isolation wherein the damper of the specified damping rate is installed between the base and the intermediate plate in combination with said springs with positive spring characteristics,

An apparatus for vibration isolation wherein elongation of the actuator that is installed on the intermediate plate is variable with changes in the load acting on the vibration-isolating table, and

An apparatus for vibration isolation wherein said actuator is a voice coil motor, linear motor, pneumatic actuator, hydraulic actuator or other linear actuator, and said controller comprises a displacement sensor, control circuit and power amplifier.

Brief Description of the Drawings

[Figure 1] A drawing explaining the principle of the present invention
[Figure 2] The first embodiment of the vibration isolation apparatus of the present invention
[Figure 3] The second embodiment of the vibration isolation apparatus of the present invention
[Figure 4] The third embodiment of the vibration isolation apparatus of the present invention
[Figure 5] The fourth embodiment of the vibration isolation apparatus of the present invention
[Figure 6] The fifth embodiment of the vibration isolation apparatus of the present invention
[Figure 7] The sixth embodiment of the vibration isolation apparatus of the present invention
[Figure 8] The seventh embodiment of the vibration isolation apparatus of the present invention
[Figure 9] The eighth embodiment of the vibration isolation apparatus of the present invention
[Figure 10] The ninth embodiment of the vibration isolation apparatus of the present invention
[Figure 11] The 10th embodiment of the vibration isolation apparatus of the present invention
[Figure 12] The 11th embodiment of the vibration isolation apparatus of the present invention
[Figure 13] The 12th embodiment of the vibration isolation apparatus of the present invention

[Figure 14] The 13th embodiment of the vibration isolation apparatus of the present invention
[Figure 15] The 14th embodiment of the vibration isolation apparatus of the present invention
[Figure 16] The 15th embodiment of the vibration isolation apparatus of the present invention
[Figure 17] The 16th embodiment of the vibration isolation apparatus of the present invention
[Figure 18] A passive vibration isolator is additionally provided with the modular apparatus for vibration isolation
[Figure 19] An active vibration isolator with six degrees of freedom using parallel links
[Figure 20] Conventional spring system vibration isolator
[Figure 21] Illustration of a conventional active vibration-isolating system

The Best Way to Implement the Invention

The present invention relates to a method and apparatus for vibration isolation featuring a two-part supporter formed of two supporters with positive and negative spring characteristics that are connected in series, and a load supporter with positive spring characteristics that is installed in parallel with the two-part supporter. The present invention further relates to an apparatus for vibration isolation wherein the base, intermediate plate and vibration table that comprise said apparatus for vibration isolation are modularized into a functional unit.

Embodiments of the method and apparatus for vibration isolation of the present invention are described below referring to the drawings. The present invention provides almost infinite rigidity against direct disturbances occurring on the equipment and isolates vibration of the floor (bed) by employing two supporters with positive and negative spring characteristics that are connected in series and another supporter with positive spring characteristics that is installed in parallel with said two-part supporter. Further, it is not necessary for the magnetic levitation mechanism to support the entire (or even part of) the load acting on the vibration-isolating table. This allows use of much smaller magnets to reduce manufacturing costs significantly. Embodiment 1 is described below. The magnetic levitation mechanism with zero-power characteristics is used as the supporter with negative spring characteristics in the first embodiment. The present invention is based on the basic structure and operation of the magnetic levitation mechanism with zero-power characteristics inclusive of electromagnets described in the patent literature 1 (Publication of unexamined patent application No. 81498-2002). The principle of the magnetic levitation is not described here because it is not the essential part of the present invention.

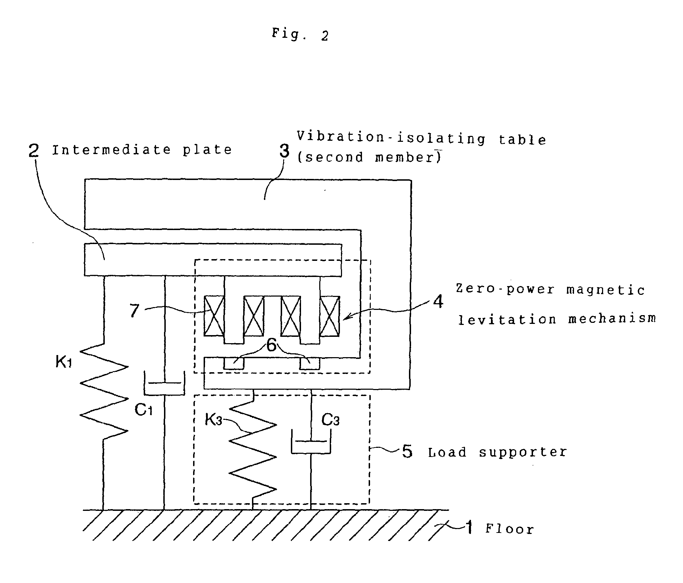

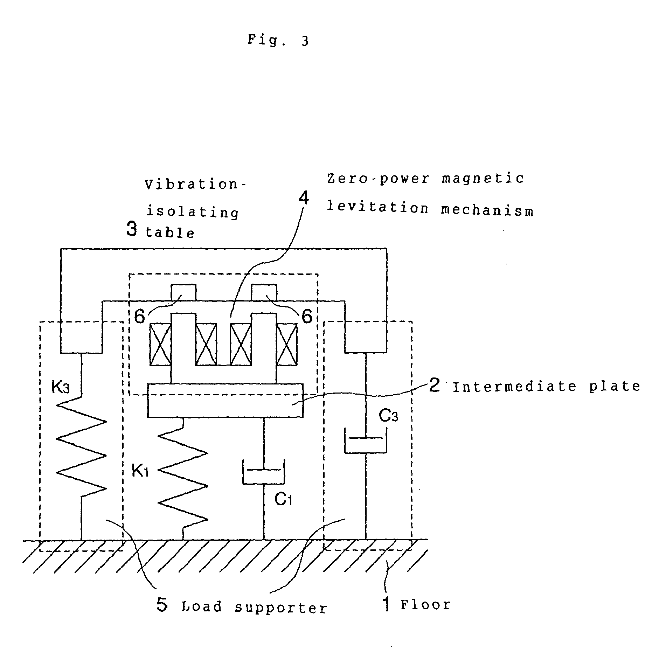

Figure 2 shows the first embodiment of the vibration isolation apparatus of the present invention. The base is the floor in the first embodiment. Springs (spring elements) with specified positive spring characteristics k1 are installed between the floor 1 and the first member 2 or the intermediate plate to isolate vibration transmitted from the base to the first member 2. The magnetic levitation mechanism 4 with negative spring characteristics (or zero-power characteristics) comprising permanent magnets 6 and electromagnets 7 is installed between said first member 2 and the second member 3 or the vibration-isolating table. The load supporter 5 with positive spring characteristics k3 is installed between the floor 1 and the second member (vibration-isolating table) 3 to support the load. The dampers c1 and c3 of the specified damping rate may be respectively installed, as required, in parallel with the supporters with positive spring characteristics k1 and k3 as shown.

The vibration isolation apparatus of Embodiment 1 comprises the vibration-isolating table 3 supported on the floor 1 by the spring with specified positive spring characteristics k3 and the vibration-isolating table 3 supported on the intermediate plate 2 by the magnetic levitation mechanism 4 with specified negative spring characteristics ks and zero-power characteristics comprising permanent magnets and electromagnets. In the example shown, the attraction of the electromagnets 7 installed on the intermediate plate 2 can be varied using a suitable controller (not shown) according to changes in the load caused by changes, such as changes in the mass, acting on the vibration-isolating table 3 on which the permanent magnets 6 are installed. Further, it is not necessary for the magnetic levitation mechanism 4 to support the entire (or even a part of) load acting on the second member 3. The electromagnets 7 are installed on the intermediate plate 2 and the permanent magnets 6 are installed on the vibration-isolating table 3 in this example. These magnets may be installed in reversed positions or installed together on one side. As stated in detail in the patent literature 1, said controller comprises displacement sensors, control circuits and power amplifiers. The same configuration of electromagnets and permanent magnets described in the patent literature 1 (Publication of unexamined patent application No. 81498-2002) can be used in the embodiments of the present invention.

The magnet section of the magnetic levitation mechanism with zero-power characteristics can be reduced in size to decrease manufacturing costs significantly. The structure is simpler and the entire vibration-isolating system can be designed more easily for overall cost reduction.

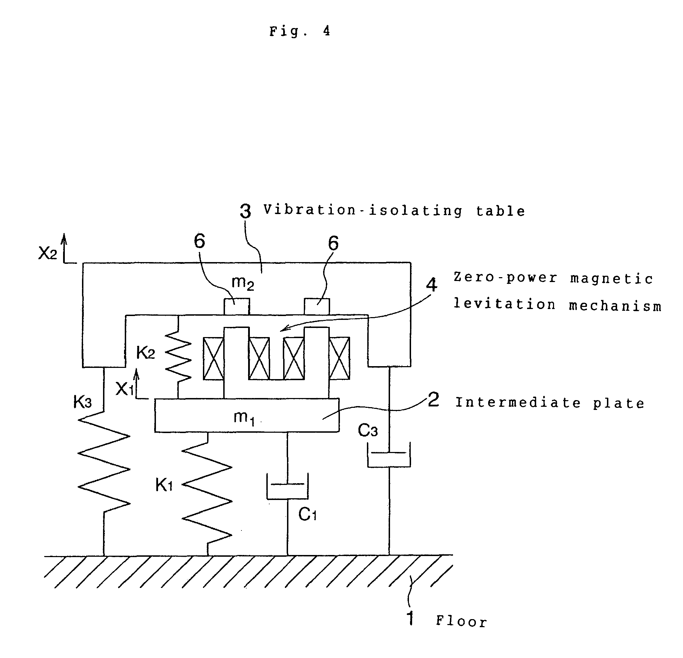

Figure 3 shows the second embodiment of the apparatus of the present invention. In the first embodiment, the area on the vibration-isolating table where the attraction takes effect is located below the intermediate plate 2. This location is chosen because for a magnetic levitation system using the attraction of direct current electromagnets such as zero-power magnetic levitation, attraction may only act upon the object being levitated in principle. This makes the structure of a vibration isolator complex and limits the freedom of its design.

In contrast, if an upward force greater than gravity can be applied to the vibration-isolating table using the spring element k3, the apparatus with the structure shown in Fig. 3 is feasible. In this case, the area on the vibration-isolating table where the attraction of the magnets occurs need not be positioned under the intermediate plate. This makes it possible to design the equipment more simply.

The second embodiment is described below referring to Fig. 3. The intermediate plate 2 is supported on the floor 1 by the supporter with specified positive spring characteristics. The magnetic levitation mechanism 4 with specified negative spring characteristics is installed between the intermediate plate 2 and the vibration isolation table 3. The vibration-isolating table 3 is arrayed to cover the entire intermediate plate 2 from above. The load supporter with positive spring characteristics k3 is installed between the floor 1 and the vibration-isolating table 3. As required, the dampers are installed as shown in parallel with the above-mentioned supporters with positive spring characteristics. The magnetic levitation mechanism is installed on the intermediate plate side but it can be installed on the vibration-isolating table 3 side if required.

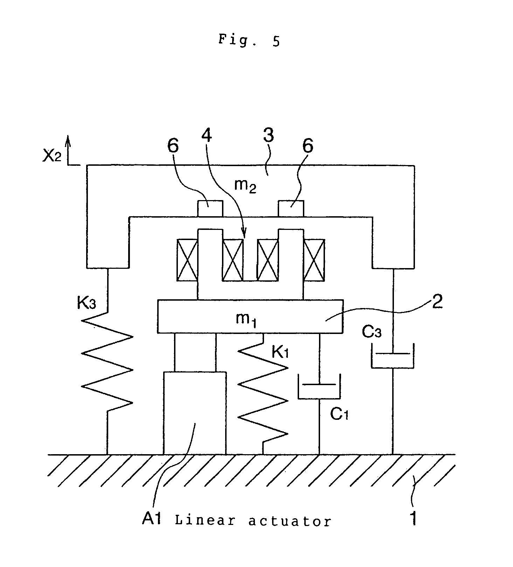

Figure 4 shows the third embodiment of the vibration isolation apparatus of the present invention. The magnitude of the negative spring characteristics in the second embodiment is determined by the strength of the permanent magnets for zero-power magnetic levitation and the gap between the area on the intermediate plate where the attraction of the permanent magnets occurs and the permanent magnets. In the third embodiment, spring elements k2 with positive spring characteristics are installed in parallel with the zero-power magnetic levitation mechanism to adjust the magnitude of the negative spring characteristics.

In Fig. 4, the intermediate plate 2 is supported on the floor 1 by the supporter (spring elements) k1 with specified positive spring characteristics. The magnetic levitation mechanism 4 with negative spring characteristics is installed between the intermediate plate 2 and the vibration-isolating table 3. The spring elements k2 with positive spring characteristics are installed between the intermediate plate 2 and the vibration-isolating table 3 in parallel with the magnetic levitation mechanism 4. The vibration-isolating table 3, in this example, is U-shaped, covering the entire intermediate plate 2 from above. The load supporter with positive spring characteristics k3 is installed between the floor 1 and the vibration-isolating table 3. As required, the dampers c1 and c3 are installed as shown in parallel respectively with the above-mentioned supporters k1 and k3 with positive spring characteristics. The magnetic levitation mechanism is installed on the intermediate plate side in this example but may be installed on the vibration-isolating table 3 side.

In the above-mentioned structure, the magnitude of the negative spring characteristics of the vibration-isolating table relative to the intermediate plate is *kn - k2*, where kn is the magnitude of the negative spring characteristics of the zero-power magnetic levitation mechanism only. If the magnitude of positive spring characteristics k1 is set equal to kn - k2, almost infinite rigidity is maintained to block direct disturbances while improving the isolation function for floor vibration.

In the system shown in Fig. 4, the magnitude of the negative spring characteristics of the vibration-isolating table relative to the intermediate plate equals *kn - k2* with the insertion of the spring elements k2 with positive spring characteristics in parallel with the zero-power magnetic levitation mechanism. The reason is explained below. Assume that the intermediate plate does not move (x1 = 0, where x1 is the amount of displacement of the intermediate plate from the equilibrium position), and the equation of motion for the vibration-isolating table is given as follows:

[Equation 1]

$$m_2 \ddot{x}_2 = \left( k_2 - k_2 \right) x_2 + k_i i + f_d \quad (1)$$

where

x2  : Displacement of vibration-isolating table from equilibrium position
kn  : Displacement attraction coefficient of magnet
ki  : Current attraction coefficient of magnet
i   : Control current
fd  : Direct disturbances acting on vibration-isolating table

Control input to achieve zero-power control is given by:

$$I(s) = -c2(s)s \; X2 \; (s) \qquad\qquad (2)$$

where c2 (s) is a strictly proper transfer function with no zeros in the poles, which is selected to stabilize the control system. When the intermediate plate is assumed not to move, a controller with an order above the quadratic expression will achieve the required stabilization.

For the sake of simplicity, assume that the initial conditions are null. Equation 1 is Laplace-transformed and Equation (2) is substituted into the result to obtain the equation given below by rearranging. The Laplace transforms of variables are expressed by the corresponding capital letters.

[Equation 2]

$$X_2(s) = \frac{1}{ms^2 + k_i c_2(s)s - (k_n - k_2)} F_d(s) \quad (3)$$

The following equation is used to evaluate the rigidity of the system against direct disturbances:

$$Fd \; (s) = F0/s; \; F0 = constant \qquad\qquad (4)$$

Displacement x ( ) of the vibration-isolating table relative to the intermediate plate is given by:

[Equation 3]

$$\frac{x_2(\infty)}{F_0} = \lim_{x \to 0} s \cdot \frac{1}{ms^2 + k_i c_2(s)s - (k_n - k_2)} \cdot \frac{1}{s} = \frac{1}{k_n - k_2} \quad (5)$$

This means that the magnitude of the negative rigidity (= force/displacement) of the vibration-isolating table relative to the intermediate plate is *kn - k2*.

Figure 5 shows the fourth embodiment of the vibration isolation apparatus of the present invention. In the second embodiment described above referring to Fig. 3, the magnitude and the damping characteristics of the positive spring characteristics of the intermediate plate 2 relative to the floor 1 are uniquely determined by the spring elements k1 and the damper c1. In Fig. 5, the linear actuator A1 is inserted between the floor 1 and the intermediate plate 2 in parallel with the spring elements k1 and the damper c1. By controlling the linear actuator A1, the positive spring characteristics and the damping characteristics are more flexibly adjustable.

In Fig. 5, the intermediate plate 2 is supported on the floor 1 by the supporter (spring elements k1) with positive spring characteristics. The linear actuator A1 is installed in parallel with the supporter k1. The magnetic levitation mechanism 4 with negative spring characteristics is installed between the intermediate plate 2 and the vibration-isolating table 3. The vibration-isolating table 3 in this example is U-shaped to cover the intermediate plate 2 from above. The load supporter with positive spring characteristics k3 is installed between the floor 1 and the vibration-isolating table 3. As required, the above-mentioned supporters k1 and k3 with positive spring characteristics are respectively provided with the dampers c1 and c3 set in parallel. The magnetic levitation mechanism is installed on the intermediate plate side in this example. It may be installed on the vibration-isolating table 3 side.

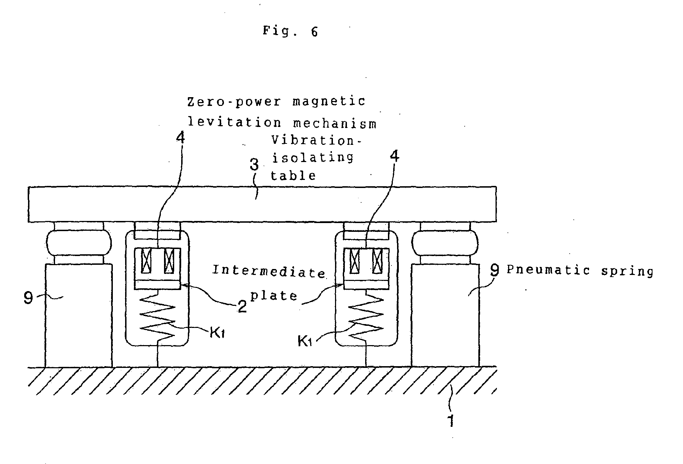

Figure 6 shows the fifth embodiment of the vibration isolation apparatus of the present invention. Pneumatic springs that are commonly employed in conventional passive vibration isolators are used in the load supporter.

In the fifth embodiment, two or more intermediate plates 2 (two in this example) are supported on the floor 1 by respective supporters (spring elements k1) with specified positive spring characteristics. The zero-power magnetic levitation mechanism 4 with negative spring characteristics is installed between each intermediate plate 2 and the vibration-isolating table 3. Pneumatic springs 9 with positive spring characteristics k3 making up the load supporter are installed between the vibration-isolating table 3 and the floor 1. The damper c1 may be installed, as required, in parallel with the supporter k1 with positive spring characteristics.

In the system structured as described above, negative rigidity is generated by the zero-power magnetic levitation mechanism 4. By adjusting its absolute value equal to k1, rigidity against direct disturbances becomes infinite. This means that rigidity against direct disturbances is set to infinite without degrading the usual passive vibration-isolating function.

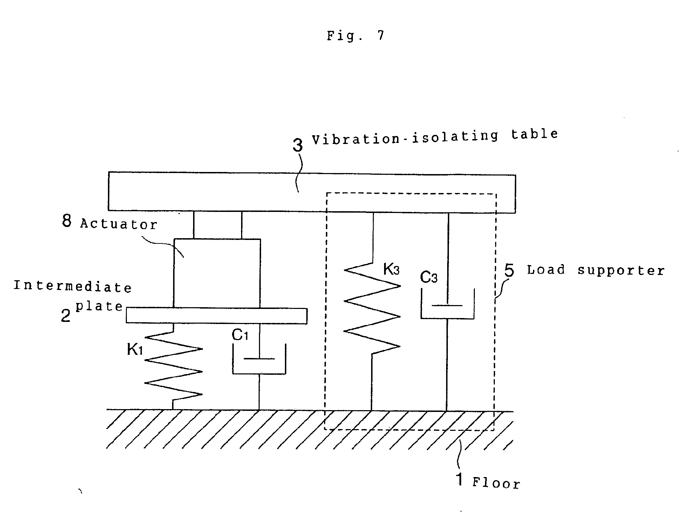

Figure 7 shows the sixth embodiment of the vibration isolation apparatus of the present invention. The actuator (linear actuator) 8 serves as the supporter with negative spring characteristics. The vibration-isolating table 3 is supported on the floor 1 by the load supporter 5 comprising positive spring elements k3 and damping elements c3. The load supported by the linear actuator 8 is reduced by using the upward force of the spring elements k3 of the load supporter 5. A smaller linear actuator 8 can be used to reduce costs. The linear actuator 8 may be replaced by a voice coil motor, linear motor, pneumatic pressure actuator, hydraulic actuator or other linear actuator without deviating from the spirit of the present invention.

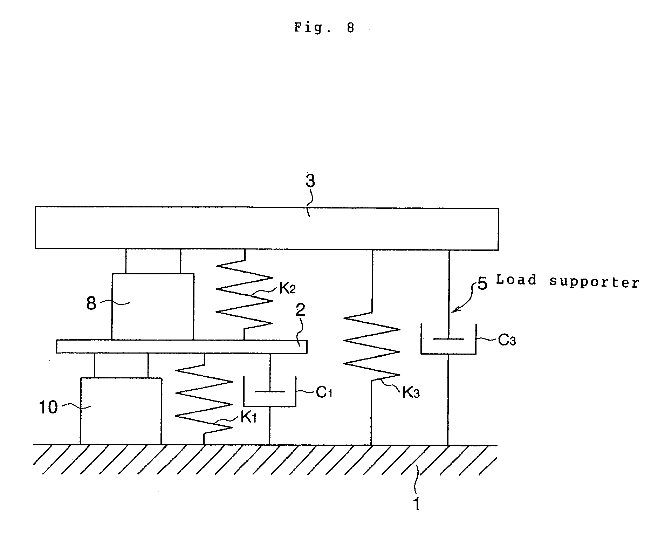

Figure 8 illustrates the seventh embodiment of the vibration isolation apparatus of the present invention. In the above-mentioned sixth embodiment shown in Fig. 7, the magnitude and the damping characteristics of the positive spring characteristics of the intermediate plate relative to the floor are uniquely determined by the spring elements k1 and the damping elements c1. In contrast, in the seventh embodiment shown in Fig. 8, the linear actuator 10 with negative spring characteristics is inserted between the intermediate plate 2 and the floor 1 in parallel with the spring elements k1 and the damping elements c1. By controlling the linear actuator 10, the positive spring characteristics and the damping characteristics are more easily adjusted.

In Fig. 8, the vibration-isolating table 3 is supported on the floor 1 by the load supporter 5 comprising the positive spring elements k3 and the damping elements c3. The intermediate plate is supported on the floor 1 by the supporter comprising the positive spring elements k1 and the damping elements c1. The linear actuator 10 with negative spring characteristics is installed between the intermediate plate and the floor 1 in parallel with the spring elements k1 and the damping elements c1. The actuator (linear actuator) 8 with negative spring characteristics and the spring elements k2 with positive spring characteristics are installed between the intermediate plate 2 and the vibration-isolating table 3. It is possible to omit the spring elements k2 installed between the intermediate plate 2 and the vibration-isolating table 3. The linear actuators 8 and 10 may be replaced by a voice coil motor, linear motor, pneumatic pressure actuator, hydraulic actuator or other linear actuator without deviating from the spirit of the present invention.

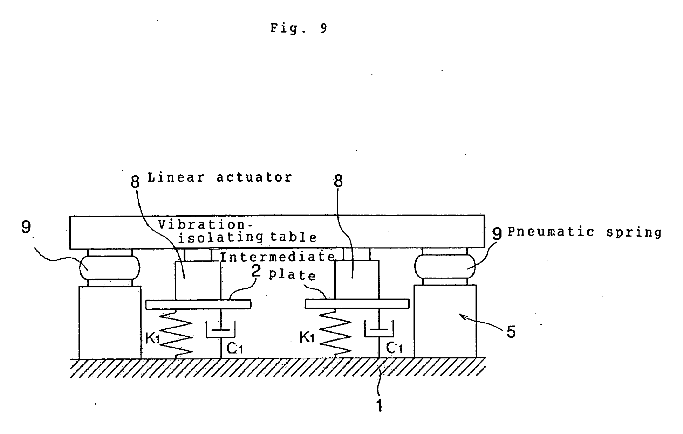

Figure 9 shows the eighth embodiment of the vibration isolation apparatus of the present invention. This is an example of using pneumatic springs that are commonly used in conventional passive vibration isolators. The pneumatic springs are used in the load supporter 5 in this example.

In the eighth embodiment, two or more intermediate plates 2 (two in this example) are supported on the floor 1 by the respective supporters with specified positive spring characteristics. The linear actuator 8 with negative spring characteristics is installed between each intermediate plate 2 and the vibration-isolating table 3. The vibration-isolating table 3 is designed and structured to cover the entire intermediate plate 2 from above. The pneumatic springs 9 with positive spring characteristics that form the load supporter 5 are installed between the vibration-isolating table 3 and the floor 1. As required, the damper c1 may be installed in parallel with the supporter k1. In the system structured as above, the negative rigidity comes from the actuator. By adjusting the actuator's absolute value equal to k1, rigidity against direct disturbances becomes infinite. This means that rigidity against direct disturbances is set to be infinite without degrading the usual passive vibration-isolating function.

The apparatus for vibration isolation using the combination of positive and negative rigidity introduced in the first through the eighth embodiments is based on the fact that the rigidity of the vibration-isolating table becomes theoretically infinite when the absolute values of negative and positive rigidity are equal to each other. The magnetic levitation mechanism with zero-power characteristics is an example of the capability to achieve negative rigidity while the coil springs are representative of positive rigidity. Rigidity is theoretically infinite only in the axial direction, or when positive and negative rigidity are arranged on the same axis. Positive and negative rigidity must be arranged in series along at least six axes if theoretically infinite rigidity is expected for all motions of the vibration-isolating table as it has six degrees of freedom.

If, for example, a vibration isolator of six degrees of freedom is constructed using the above-mentioned embodiments, the structure proposed and described in the publication of unexamined patent application No. 81498-2002 of the inventors of the present invention has been adopted.

For the hybrid electromagnets oriented perpendicular (or the magnetic levitationmechanismwith zero-power characteristics; simply termed "magnetic levitation mechanism" hereafter), a large hybrid electromagnet must be used to support the mass of the intermediate plate and the vibration-isolating table.

For the horizontal arrangement, on the other hand, a backside differential structure is employed because the system need not support gravity. Two combinations of positive and negative rigidity must be studied when developing a vibration-isolating table.

A single intermediate plate (the first member) is used in all of the above-mentioned embodiments. Vibration at any axis of the intermediate plate may affect the other axes. When four pairs of positive and negative rigidity must be connected in series to use three degrees of freedom due to the structure of the vibration-isolating table, a complex control system has to be designed to offset the redundancy. Six degrees of freedom are taken into consideration even when vibration isolation is not actually required for all six axes. These problems of the above-mentioned embodiments arise from the common use of the intermediate plate.

To solve these problems, the modular design for achieving theoretically infinite axial rigidity is introduced in the ninth through 12th embodiments of the present invention described below. At least one each of the base, intermediate plate or vibration-isolating table are paired into a module. Each module has a vibration-isolating function for one degree of freedom. The problems related to the common use of a single intermediate plate in vibration isolation are eliminated because each module has its own intermediate plate. Vibration isolation for multiple degrees of freedom is achieved by combining the modules. There is no need to be concerned about unnecessary degrees of freedom. Parallel links are adopted to isolate vibration for all six degrees of freedom.

The ninth through 12th embodiments of the present invention are described below referring to the drawings.

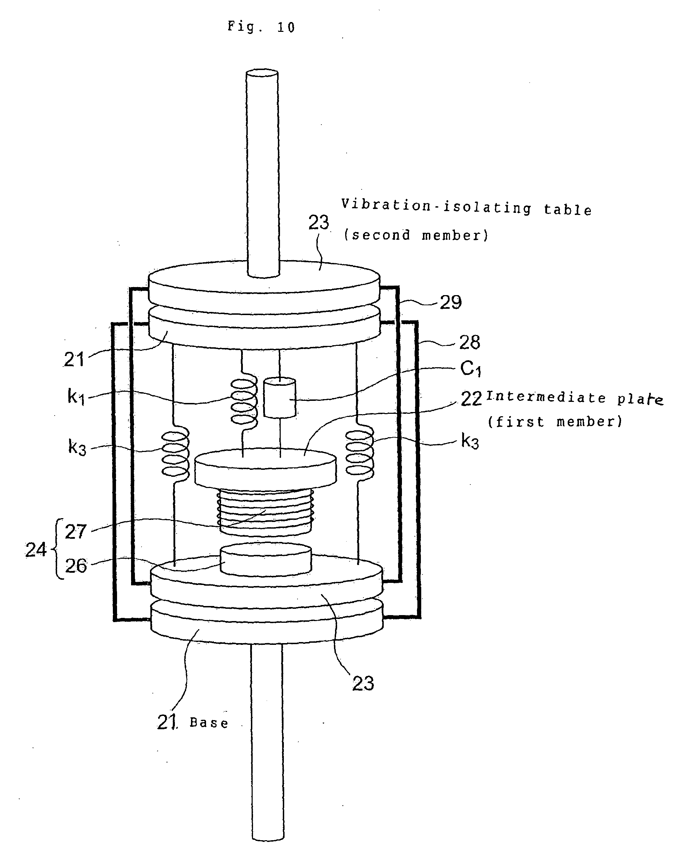

Figure 10 shows the ninth embodiment of the present invention.

The vibration isolation apparatus of this structure is basically the same as any of the first through the eighth embodiments described above except that at least one each of the base (foundation), intermediate plate (the first member) or vibration-isolating table (the second member) are paired into a module. Each module has an independent vibration-isolating function.

In Fig. 10, 21 is the foundation (base hereafter), 22 the first member or intermediate plate and 23 the second member or vibration-isolating table. Two halves of the base 21 and vibration-isolating table 23, respectively, are connected by their respective tie members 28 and 29. The halves of the base and the vibration-isolating table are arrayed alternately as shown. Each half is a flat plate in this embodiment but it may not necessarily be flat and may take any other form provided that the supporter, magnetic levitation mechanism and load supporter are installed on the plates and fulfill their prescribed functions. The tie members 28 and 29 may be designed in any suitable shape.

The intermediate plate 22 is installed between the halves of the base 21 and the vibration-isolating table 23. The intermediate plate 22 is supported on the base 21 by the supporter $k_1$ with specified positive spring characteristics. The magnetic levitation mechanism 24 with specified negative spring characteristics is installed between the intermediate plate 22 and the vibration-isolating table 23. The load supporter with positive spring characteristics $k_3$ is installed between the base 21 and the vibration-isolating table 23. As required, the damper $c_1$ is installed in parallel with the above-mentioned supporters with positive spring characteristics. The electromagnets and the permanent magnets of the magnetic levitation mechanism are mounted on the intermediate plate and the vibration-isolating table 23, respectively, in this example. These magnets may be installed in reversed mounting positions.

The springs $k_3$, the load supporter, may be replaced by the pneumatic springs described in the above-mentioned embodiments. The spring elements with positive spring characteristics may be installed in parallel with the magnetic levitation mechanism 24.

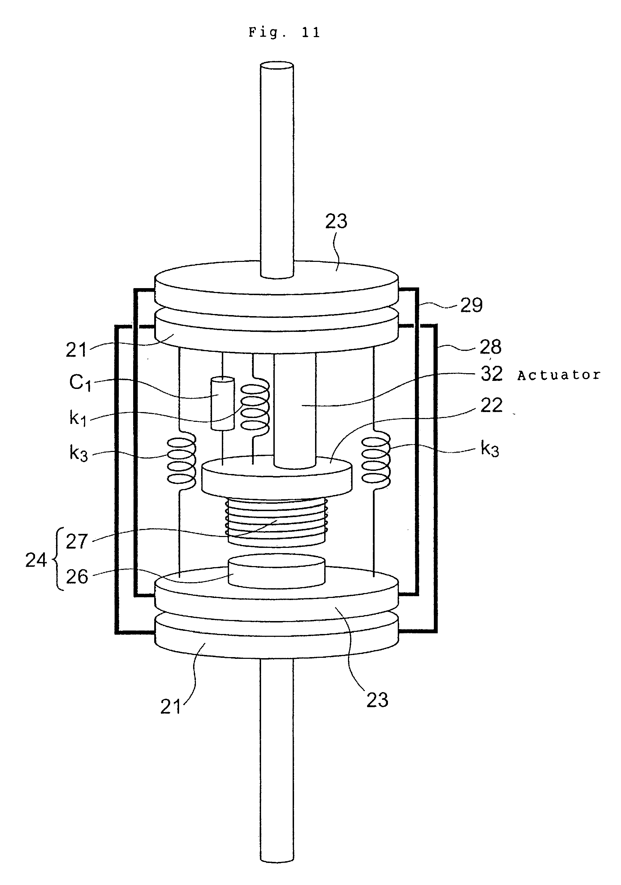

Figure 11 presents the 10th embodiment of the present invention. The 10th embodiment is the same as the ninth embodiment except that the linear actuator 32 with positive rigidity is arranged in parallel with the supporter $k_1$

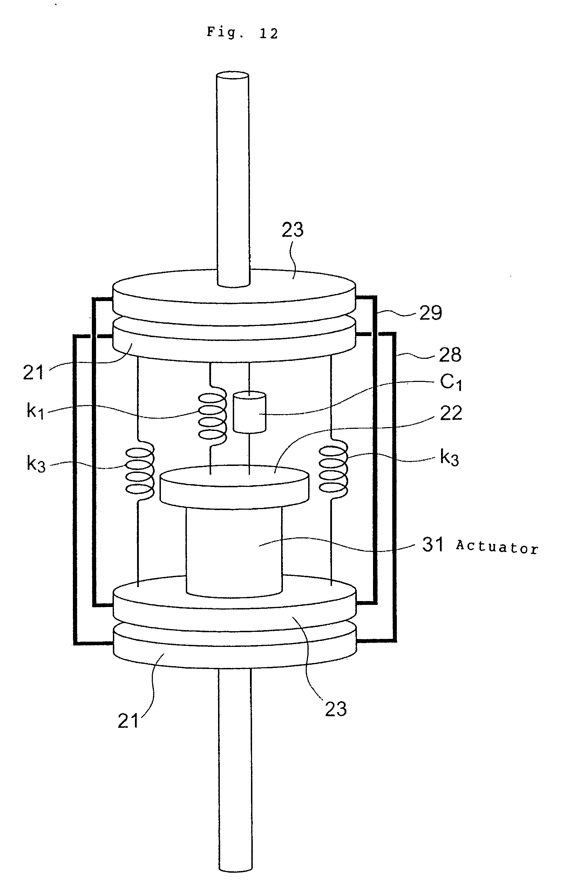

Figure 12 shows the 11th embodiment of the present invention. The 11th embodiment is the same as the ninth embodiment except that the actuator 31 with negative rigidity replaces the magnetic levitation mechanism used in the ninth embodiment.

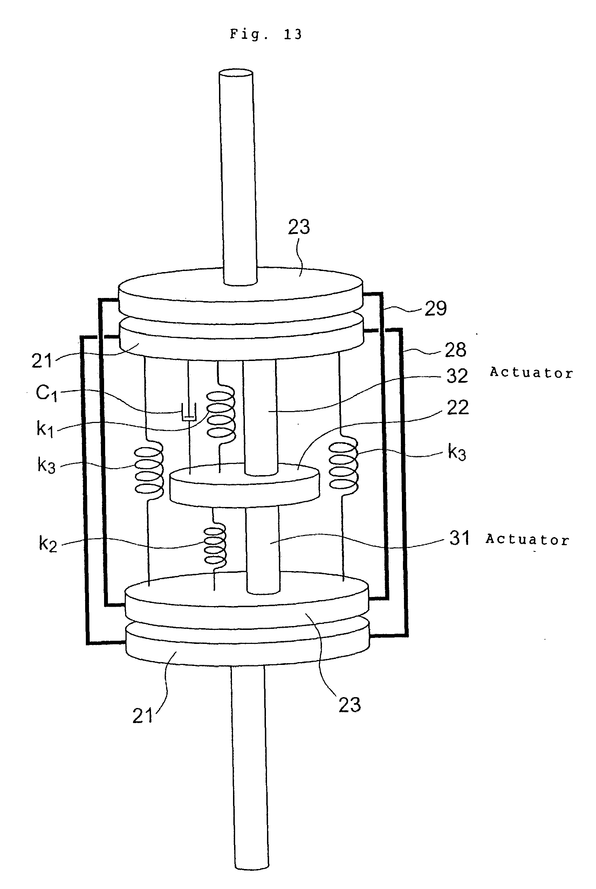

Figure 13 presents the 12th embodiment of the present invention. The actuator 31 with negative rigidity and the spring elements $k_2$ with positive spring characteristics replace the magnetic levitation mechanism used in the ninth embodiment. Further, the actuator 32 with positive rigidity is added in parallel with the supporter installed between the base and the intermediate plate.

The above-mentioned ninth through 12th embodiments use modules each comprising at least one each of the base (foundation), intermediate plate (the first member) or vibration-isolating table (the second member). Specifically, the base and the vibration-isolating table comprise two halves. The respective halves are connected by the tie members 28 and 29. The halves of the base and the vibration-isolating table are arrayed alternately as shown. The intermediate plate is installed between one half of the base and one half of the vibration-isolating table (nesting). The nested structure, however, makes the system complex, limits the freedom of its design, and increases the manufacturing cost and labor.

To avoid such problems, the 13th through 16th embodiments of the present invention use a combination of the supporter described in the ninth through 12th embodiments and the load supporter introduced in the 13th through 16th embodiments to eliminate the necessity of using a nested structure and produce more practical units.

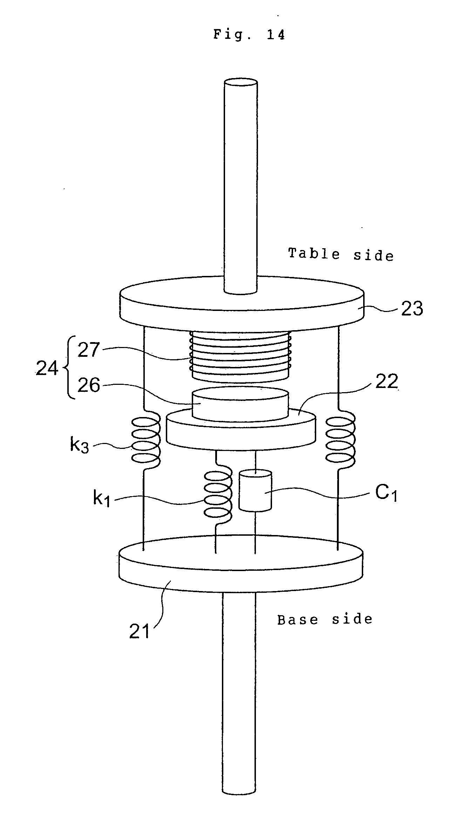

Figure 14 shows the 13th embodiment of the present invention. The 13th embodiment uses both the nested vibration-isolating structure shown in the above-mentioned ninth embodiment and the non-nested structure shown in the second and other embodiments.

In Fig. 14, 21 is the foundation (base hereafter), 22 the first member or intermediate plate and 23 the second member or vibration-isolating table. The base 21 and the vibration-isolating table 23 are installed separately or one above the other. The intermediate plate is installed between the base 21 and the vibration-isolating table 23. The base 21 supports the intermediate plate 22 via the supporter k1 with specified positive spring characteristics. The magnetic levitation mechanism 24 with specified negative spring characteristics is placed between the intermediate plate 22 and the vibration-isolating table 23. The load supporter with positive spring characteristics k3 is installed between the vibration-isolating table 23 and the base 21. As required, the damper c1 is installed in parallel with the above-mentioned supporters with positive spring characteristics. The electromagnets and the permanent magnets of the magnetic levitation mechanism are mounted on the vibration-isolating table 23 and the intermediate plate 22, respectively, in this example. These magnets may be installed in reversed mounting positions. The springs k3, the load supporter, may be replaced by the pneumatic springs described in the above-mentioned embodiments. The spring elements with positive spring characteristics may be installed in parallel with the magnetic levitation mechanism 24.

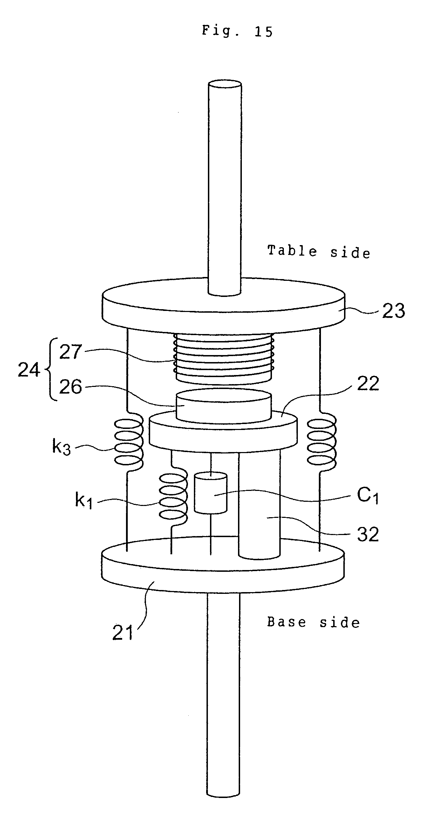

Figure 15 presents the 14th embodiment of the present invention. The 14th embodiment is the same as the 13th embodiment except that the linear actuator 32 with positive rigidity is added in parallel with the supporter k1.

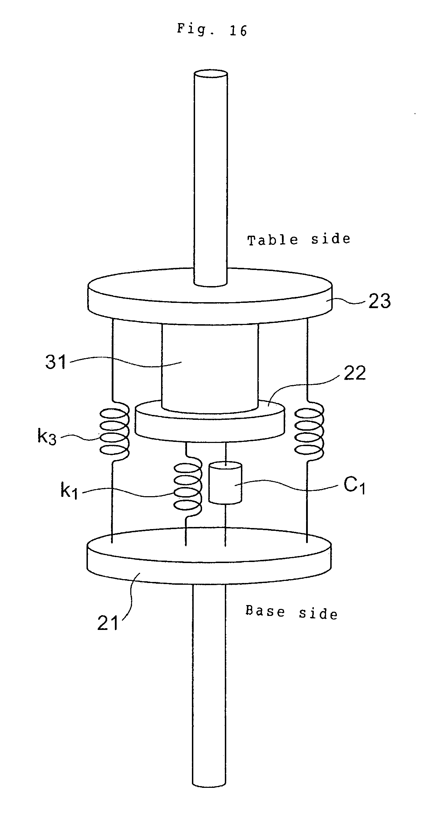

Figure 16 presents the 15th embodiment of the present invention. The 15th embodiment is the same as the 13th embodiment except that the actuator 31 with negative rigidity replaces the magnetic levitation mechanism used in the 13th embodiment.

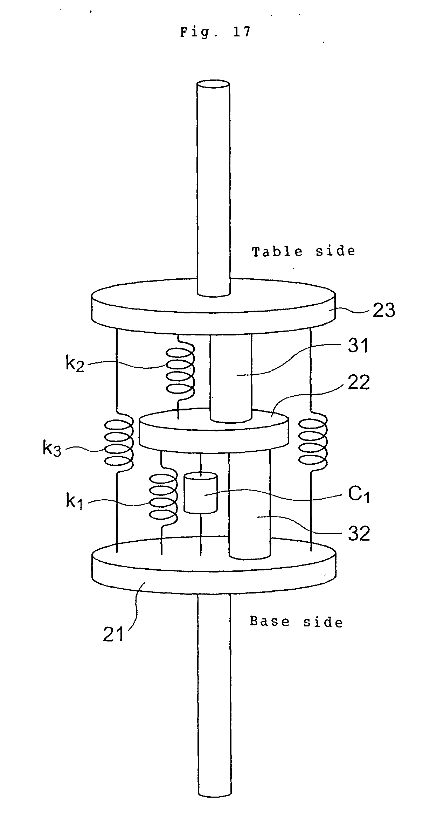

Figure 17 presents the 16th embodiment of the present invention. The 16th embodiment is the same as the 13th embodiment except that the actuator 31 with negative rigidity and the spring elements k2 with positive spring characteristics replace the magnetic levitation mechanism. Further, the actuator 32 with positive rigidity is added in parallel with the supporter installed between the base and the intermediate plate in the 13th embodiment.

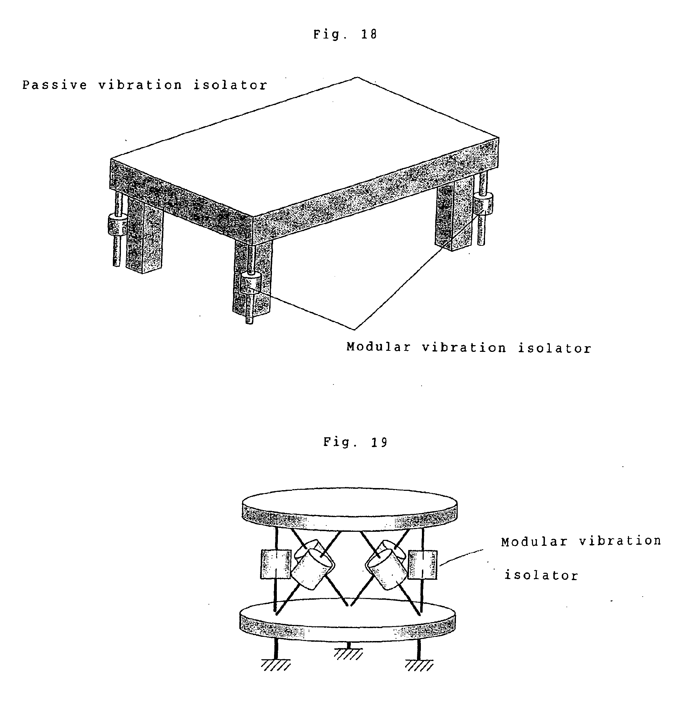

Figures 18 and 19 show the operation of the above-mentioned modular-type vibration isolation apparatus of the present invention. In Fig. 18, the modular apparatus is mounted on the table in parallel with the legs. Figure 19 shows the active vibration isolation apparatus with six degrees of freedom using parallel links.

The vibration isolation methods and the embodiments of the vibration isolation apparatus of the present invention have been described above. Within the purport of the present invention, various shapes and types of the intermediate plate and the vibration-isolating table are possible. This also applies to the shapes and types of the electromagnets and permanent magnets as well as their configuration (e.g., installing the electromagnets on the intermediate plate or vibration-isolating table; installing the permanent magnets on the vibration-isolating table or the intermediate plate; adding the ferromagnets to the permanent magnets; or setting the permanent magnets in the core of the electromagnets and installing the assembly on either the vibration-isolating table or the intermediate plate while installing the ferromagnets on the counterpart member); the shapes and types of the actuators, springs and dampers as well as their configuration on the intermediate plate (e.g., springs may be added between the floor and the intermediate plate to form a suitable damper); the magnetic levitation mechanism with zero-power characteristics; the actuator control means (e.g., types of displacement sensors, control circuit model, power amplification method and actuator control systems using the above); and the direction of vibration isolation (e.g., vibration isolation in the vertical direction is mainly described in the above-mentioned embodiments; however, the vibration isolation apparatus of the present invention can be configured to isolate vibration in the horizontal direction or in both directions). The floor generally refers to the so-called foundation. Various shapes of intermediate plates and vibration-isolating tables are conceivable for use without deviating from the scope of the present invention. The supporters with positive rigidity (spring elements) may be made of rubber and other passive elastics and actuators with positive rigidity. The magnetic levitation mechanism with negative rigidity may be an actuator which will be actively controlled to present negative rigidity.

The present invention may be implemented in various other forms of embodiment without deviating from its spirit or main features. The above-mentioned embodiments are therefore only a few examples and should not be construed as limiting. All variations and alterations falling under the scope of equivalents to the patent claims come under the scope of the present invention.

Industrial Applicability

Owing to its unique and innovative structure in which two supporters with positive and negative spring characteristics are connected in series and installed in parallel with the load supporter with positive spring characteristics, the present invention provides the following specific effects:

(a) When using the zero-power magnetic levitation mechanism as the supporter with negative spring characteristics:

Smaller magnets can be used because it is not necessary for the magnetic levitation mechanism to support the entire (or even part of) load of the vibration-isolating table. This decreases the manufacturing costs significantly.

It is possible to simplify the structure, make the design easier and reduce manufacturing costs.

(b) When using the linear actuators as the supporter with negative spring characteristics:

Actuators of a lower output can be used because it is not necessary for the linear actuator to support the entire (or even part of) load of the vibration-isolating table. This decreases the manufacturing costs significantly.

(c) The base, intermediate plate and vibration-isolating table that form the above-mentioned vibration isolation system are modularized. By combining the modules, vibration isolation systems for multiple degrees of freedom are designed easily and there is no need to be concerned about unnecessary degrees of freedom. Vibration isolation for all six degrees of freedom is easily achieved by using parallel links.

The present invention can be used for:

Precision equipment and systems including semiconductor exposure systems and laser processors
Super-precision measurement by electron microscope, STM, AFM, etc.
Ultrafine processing

**Claims**

1. A method for vibration isolation wherein nearly infinite rigidity adequate for preventing direct disturbances is achieved and vibration from the base is isolated due to the functioning of the first member installed between the base and the second member; the supporter set comprises two individual supporters with positive and negative spring characteristics, respectively, connected in series; and the load supporter with positive spring characteristics is installed between the base and the second member in parallel with said supporter set,

2. A method for vibration isolation wherein vibration transmitted from the base to the first member is isolated by the springs installed between the base and the first member; vibration transmitted from the first to the second member is isolated by the magnetic levitation mechanism with zero-power characteristics comprising permanent magnets and electromagnets that are installed between the first and the second members and by the load supporter with positive spring characteristics that is installed between the base and the second member; and the load acting on the second member is supported by said magnetic levitation mechanism and said load supporter,

3. A method for vibration isolation wherein vibration transmitted from the base to the first member is isolated by the springs installed between the base and the first member; vibration transmitted from the first to the second member is isolated by the magnetic levitation mechanism with zero-power characteristics comprising permanent magnets and electromagnets and the spring elements with positive spring characteristics in parallel with said magnetic levitation mechanism that is installed between the first and the second members, and the load supporter with positive spring characteristics is installed between the base and the second member; and the load acting on the second member is supported by said magnetic levitation mechanism and said load supporter,

4. A method for vibration isolation wherein vibration transmitted from the base to the first member is isolated by the spring elements with positive spring characteristics and the linear actuator in parallel with said spring elements that are installed between the base and the first member; vibration transmitted from the first to the second member is isolated by the magnetic levitation mechanism with zero-power characteristics comprising permanent magnets and electromagnets that is installed between the first and the second members, and the load supporter with positive spring characteristics is installed between the base and the second member; and the load acting on the second member is supported by said magnetic levitation mechanism and said load supporter,

5. A method for vibration isolation wherein vibration transmitted from the base to the first member is isolated by the springs installed between the base and the first member; vibration transmitted from the first to the second member is isolated by the zero-power magnetic levitation mechanism with negative spring characteristics that is installed between the first and the second members and the load supporter comprising pneumatic springs with positive spring characteristics installed between the second member and the base; and a part of the load acting on the second member is supported by said load supporter,

6. An apparatus for vibration isolation comprising the intermediate plate supported on the base by the springs with specified positive spring characteristics; the vibration-isolating table is supported on the intermediate plate by the magnetic levitation mechanism with zero-power characteristics and the specified negative spring characteristics comprising permanent magnets and electromagnets; and the load supporter with positive spring characteristics is installed between the vibration-isolating table and the base,

7. An apparatus for vibration isolation comprising the intermediate plate supported on the base by the springs with specified positive spring characteristics; the vibration-isolating table is supported on the intermediate plate by the magnetic levitation mechanism with zero-power characteristics and the specified negative spring characteristics comprising permanent magnets and electromagnets and by the spring elements with positive spring characteristics arranged in parallel with the magnetic levitation mechanism; and the load supporter with positive spring characteristics is arranged between said vibration-isolating table and said base,

8. An apparatus for vibration isolation comprising the intermediate plate supported on the base by the spring elements with specified positive spring characteristics and the linear actuator; the vibration-isolating table is supported on the intermediate plate by the magnetic levitation mechanism with zero-power characteristics and the specified negative spring characteristics comprising permanent magnets and electromagnets; and the load supporter with positive spring characteristics is installed between said vibration-isolating table and said base,

9. The apparatus for vibration isolation as claimed in any of Claims 6 through 8 wherein said load supporter comprises the spring elements with positive spring characteristics and the damper of the specified damping rate is installed in parallel with said spring elements,

10. The apparatus for vibration isolation as claimed in any of Claims 6 through 8 wherein said load supporter comprises the pneumatic springs with positive spring characteristics,

11. The apparatus for vibration isolation as claimed in any of Claims 6 through 10 wherein the damper of the specified damping rate is installed between the base and the intermediate plate in combination with said spring elements with positive spring characteristics,

12. The apparatus for vibration isolation as claimed in any of Claims 6 through 11 wherein attraction of the electromagnets of said magnetic levitation mechanism is variable with changes in the load acting on the vibration-isolating table,

13. The apparatus for vibration isolation as claimed in any of Claims 6 through 12 wherein the halves of said base and vibration-isolating table are connected by their respective tie members; the halves of the base and the vibration-isolating table are arrayed alternately; and the intermediate plate is installed between one half of the base and one half of the vibration-isolating table,

14. The apparatus for vibration isolation as claimed in any of Claims 6 through 13 wherein said base is the floor of the apparatus for vibration isolation,

15. The apparatus for vibration isolation as claimed in any of Claims 6 through 13 wherein at least one each of the base, intermediate plate or vibration-isolating table are modularized into one functional unit,

16. A method for vibration isolation wherein vibration transmitted from the base to the first member is isolated by the springs installed between the base and the first member; vibration transmitted from the first to the second member is isolated by the supporter with negative spring characteristics comprising the actuator and the controller that is installed between the first and the second members; and a part of the load acting on the second member is supported by the load supporter with positive spring characteristics that is installed between the second member and the base,

17. A method for vibration isolation wherein vibration transmitted from the base to the first member is isolated by the springs installed between the base and the first member; vibration transmitted from the first to the second member is isolated by the supporter with negative spring characteristics comprising the actuator and the controller that is installed between the first and the second members and by the spring elements with positive spring characteristics that are installed between the first and the second member; and a part of the load acting on the second member is supported by the load supporter with positive spring characteristics that is installed between the second member and the base,

18. A method for vibration isolation wherein vibration transmitted from the base to the first member is isolated by the supporter with positive spring characteristics and the linear actuator that is installed between the base and the first member; vibration transmitted from the first to the second member is isolated by the supporter with negative spring characteristics comprising the actuator and the controller that is installed between the first and the second members and by the spring elements with positive spring characteristics between the first and the second member in parallel with said actuator; and a part of the load acting on the second member is supported by the load supporter with positive spring characteristics that is installed between the second member and the base,

19. An apparatus for vibration isolation comprising the intermediate plate supported on the base by the spring elements with specified positive spring characteristics; the vibration-isolating table supported on the intermediate plate by the supporter with specified negative spring characteristics comprising the actuator and the controller; and the load supporter with positive spring characteristics that is installed between the vibration-isolating table and the base,

20. An apparatus for vibration isolation comprising the intermediate plate supported on the base by the spring elements with specified positive spring characteristics and the linear actuator; the vibration-isolating table supported on the intermediate plate by the supporter with specified negative spring characteristics comprising the actuator and the controller; and the load supporter with positive spring characteristics that is installed between the vibration-isolating table and the base,

21. The apparatus for vibration isolation as claimed in Claims 19 or 20 wherein the spring elements with positive spring characteristics are installed in parallel with the supporter (actuator) that is installed between the intermediate plate and the vibration-isolating table,

22. The apparatus for vibration isolation as claimed in any of Claims 19 through 21 wherein the halves of said base and vibration-isolating table are connected by their respective tie members; the halves of the base and the vibration-isolating table are arrayed alternately; and the intermediate plate is installed between one half of the base and one half of the vibration-isolating table,

23. The apparatus for vibration isolation as claimed in any of Claims 19 through 22 wherein said base is the floor of the apparatus for vibration isolation,

24. The apparatus for vibration isolation as claimed in any of Claims 19 through 22 wherein at least one each of the base, intermediate plate or vibration-isolating table are modularized into one functional unit,

25. An apparatus for vibration isolation comprising more than one intermediate plate supported on the base by the spring elements with specified positive spring characteristics; the vibration-isolating table is supported on said intermediate plates by the supporter with specified negative spring characteristics comprising the actuator and the controller; and the load supporter with positive spring characteristics is installed between the vibration-isolating table and the base,

26. The apparatus for vibration isolation as claimed in any of Claims 19 through 25 wherein said load supporter comprises the springs with positive spring characteristics and the damper of the specified damping rate is installed in parallel with the springs,

27. The apparatus for vibration isolation as claimed in any of Claims 19 through 25 wherein said load supporter comprises the pneumatic springs with positive spring characteristics,

28. The apparatus for vibration isolation as claimed in any of Claims 19 through 25 wherein the damper of the specified damping rate is installed between the base and the intermediate plate in combination with said springs with positive spring characteristics,

29. The apparatus for vibration isolation as claimed in any of Claims 25 through 28 wherein elongation of the actuator that is installed on the intermediate plate is variable with changes in the load acting on the vibration-isolating table, and

30. The apparatus for vibration isolation as claimed in any of Claims 19 through 29 wherein said actuator is a voice coil motor, linear motor, pneumatic actuator, hydraulic actuator or other linear actuator and said controller comprises a displacement sensor, control circuit and power amplifier.

Fig. 1

Fig. 2

2 Intermediate plate

3 Vibration-isolating table (second member)

4 Zero-power magnetic levitation mechanism

7

$K_1$

$C_1$

$K_3$  $C_3$

6

5 Load supporter

1 Floor

Fig. 3

Vibration-
isolating
3 table

Zero-power magnetic
levitation mechanism

4

6      6

K3

K1

C1

2 Intermediate plate

C3

5 Load supporter

1 Floor

Fig. 4

$3$ Vibration-isolating table

$6$       $6$

$X_2$

$m_2$

$4$ Zero-power magnetic
levitation mechanism

$K_2$

$X_1$

$K_3$

$m_1$

$2$ Intermediate plate

$C_3$

$K_1$

$C_1$

$1$ Floor

18

Fig. 5

A1 Linear actuator

Fig. 6

Zero-power magnetic
levitation mechanism
4    Vibration-
3    isolating
      table

Intermediate
plate
2

K₁    K₁

9    Pneumatic spring

9

1

Fig. 7

3 Vibration-isolating table

8 Actuator

Intermediate plate

2 plate

K₃  C₃

5 Load supporter

K₁  C₁

1 Floor

Fig. 8

Fig. 9

Fig. 10

Vibration-isolating table
(second member)

23

29

28

21

$k_1$

$C_1$

22 Intermediate plate
(first member)

$k_3$

$k_3$

24 { 27
26

23

21 Base

24

Fig. 11

Fig. 12

23

29

28

21

k₁

C₁

22

k₃

k₃

31 Actuator

21

23

Fig. 13

Fig. 14

Table side

24 { 27
26

23

22

$k_3$

$k_1$                    $C_1$

21

Base side

Fig. 15

Table side

23

24 { 27
     26

22

k₃

k₁

C₁

32

21

Base side

Fig. 16

Fig. 17

Table side

k₂

23

31

22

k₃

k₁

C₁

32

21

Base side

Fig. 18

Passive vibration isolator

Modular vibration isolator

Fig. 19

Modular vibration

isolator

Fig. 20

(A) Direct disturbances                                    (B)
(disturbances occurring on the spring)

Mass change acting on
the spring or vibration

Ground disturbances
(vibration from the foundation)

Conventional vibration-isolating system

Fig. 21

## INTERNATIONAL SEARCH REPORT

| International application No. |
| --- |
| PCT/JP2004/004491 |

A. CLASSIFICATION OF SUBJECT MATTER
    Int.Cl⁷ F16F15/03

According to International Patent Classification (IPC) or to both national classification and IPC

B. FIELDS SEARCHED

Minimum documentation searched (classification system followed by classification symbols)
    Int.Cl⁷ F16F15/03, B23Q1/00, 11/00

Documentation searched other than minimum documentation to the extent that such documents are included in the fields searched

| | | | |
| --- | --- | --- | --- |
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y<br><br>A | JP 2002-81498 A (Japan Science and Technology Corp.),<br>22 March, 2002 (22.03.02),<br>Full text; Figs. 1, 9 to 10<br>(Family: none) | 1-12,14-21,<br>23-30<br>13,22 |
| Y | JP 8-312715 A (Canon Inc.),<br>26 November, 1996 (26.11.96),<br>Par. Nos. [0009] to [0012], [0042]<br>(Family: none) | 1-12,14-21,<br>23-30 |
| A | JP 6-129487 A (Hitachi, Ltd.),<br>10 May, 1994 (10.05.94),<br>Fig. 15<br>(Family: none) | 1-30 |

☐ Further documents are listed in the continuation of Box C.    ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>    24 June, 2004 (24.06.04) | Date of mailing of the international search report<br>    13 July, 2004 (13.07.04) |
| --- | --- |
| Name and mailing address of the ISA/<br>    Japanese Patent Office | Authorized officer |
| Facsimile No. | Telephone No. |

Form PCT/ISA/210 (second sheet) (January 2004)